# EUROPEAN PATENT APPLICATION

(11) **EP 4 794 100 A1**
(43) Date of publication of application: **19.08.2026**
(21) Application number: 26154814.3
(22) Date of filing: 28.01.2026
(51) Int. Cl.: H01M 50/46

(54) **BATTERY, ENERGY STORAGE DEVICE, AND ENERGY STORAGE SYSTEM**

(30) Priority: 12.02.2025 CN 202510155689
(71) Applicant: Xiamen Hithium Energy Storage Technology Co., Ltd., Xiamen, Fujian 361100 (CN)
(72) Inventor: Chen, Bili, Xiamen, 361100 (CN); Zheng, Jianming, Xiamen, 361100 (CN)
(74) Representative: RGTH

(57) **Abstract**

The present disclosure provides a battery, an energy storage device, and an energy storage system. The battery of the present disclosure includes a positive electrode sheet, a separator, and a negative electrode sheet. The separator is disposed between the positive electrode sheet and the negative electrode sheet. The separator includes a substrate film, a first adhesive layer, and a second adhesive layer. The first adhesive layer is disposed between the substrate film and the positive electrode sheet for bonding the substrate film to the positive electrode sheet, and the second adhesive layer is disposed between the substrate film and the negative electrode sheet for bonding the substrate film to the negative electrode sheet. The battery satisfies the relationship: 0.85≤(Fc·Wc)/(Fa·Wa)≤6.36; where Fc is the peel strength between the first adhesive layer and the positive electrode sheet, Wc is the coating amount per unit area of the first adhesive layer on the substrate film, Fa is the peel strength between the second adhesive layer and the negative electrode sheet, and Wa is the coating amount per unit area of the second adhesive layer on the substrate film.

## Description

### TECHNICAL FIELD

The present disclosure relates to the field of energy storage, and specifically to a battery, an energy storage device, and an energy storage system.

### BACKGROUND

With the growing demand for large-capacity energy storage batteries, the coating thickness of battery electrode sheets is designed to be increasingly higher. This leads to an increasing range of thickness expansion and contraction of the negative electrode sheet during normal charge and discharge of the battery, which in turn causes wrinkles at the interface of the negative electrode sheet, thereby reducing the capacity and cycle life of the battery.

### SUMMARY

Embodiments of the present disclosure provide a battery in which the negative electrode sheet is less prone to wrinkling and has a longer cycle life.

In a first aspect, embodiments of the present disclosure provide a battery, which comprises a positive electrode sheet, a separator, and a negative electrode sheet. The separator is disposed between the positive electrode sheet and the negative electrode sheet. The separator comprises a substrate film, a first adhesive layer, and a second adhesive layer. The first adhesive layer is disposed between the substrate film and the positive electrode sheet for bonding the substrate film to the positive electrode sheet, and the second adhesive layer is disposed between the substrate film and the negative electrode sheet for bonding the substrate film to the negative electrode sheet. The battery satisfies a relationship: 0.85≤(Fc·Wc)/(Fa·Wa)≤6.36, where Fc is a peel strength between the first adhesive layer and the positive electrode sheet, Wc is a coating amount per unit area of the first adhesive layer on the substrate film, Fa is a peel strength between the second adhesive layer and the negative electrode sheet, and Wa is a coating amount per unit area of the second adhesive layer on the substrate film.

In some embodiments, the battery satisfies the relationship: 2.16 ≤(Fc·Wc)/(Fa·Wa)≤ 6.20.

In some embodiments, the peel strength Fc between the first adhesive layer and the positive electrode sheet is in the range of Fc ≥ 2.1 N/m.

In some embodiments, the peel strength Fa between the second adhesive layer and the negative electrode sheet is in the range of Fa ≥ 0.5 N/m.

In some embodiments, the peel strength Fa between the second adhesive layer and the negative electrode sheet is in the range of 0.5 N/m ≤ Fa ≤ 2.2 N/m.

In some embodiments, the coating amount per unit area Wc of the first adhesive layer on the substrate film is in the range of 0.1 g/m² ≤ Wc ≤ 0.65 g/m², and the coating amount per unit area Wa of the second adhesive layer on the substrate film is in the range of 0.1 g/m² ≤ Wa ≤ 0.65 g/m².

In some embodiments, both the first adhesive layer and the second adhesive layer comprise an adhesive. If the total mass percentage of the adhesive in the first adhesive layer and the second adhesive layer is P%, the battery further satisfies the relationship: 0.05 ≤(Fc·Wa)/(Fa·Wc·P)≤ 1.39.

In some embodiments, the battery further satisfies the relationship: 0.05 ≤(Fc·Wa)/(Fa·Wc·P)≤ 0.86.

In some embodiments, the total mass percentage P% of the adhesive in the first adhesive layer and the second adhesive layer is in the range of 2% ≤ P% ≤ 25%.

In a second aspect, embodiments of the present disclosure further provide an energy storage device, which comprises:a box body; and a plurality of batteries according to embodiments of the present disclosure, wherein the plurality of batteries are accommodated in the box body.

In a third aspect, embodiments of the present disclosure further provide an energy storage system, which comprises: an electric energy conversion device and the energy storage device according to embodiments of the present disclosure. The electric energy conversion device is electrically connected to the energy storage device. The electric energy conversion device is used to convert other forms of energy into electric energy, and the energy storage device is used to store the electric energy.

During the charge and discharge cycles of the battery, the negative electrode sheet continuously undergoes delithiation and lithiation. During the lithiation process of the negative electrode sheet, the negative electrode sheet has an expansion force outward along its extending plane and an expansion force in the thickness direction. Since the positive electrode sheet, the separator, and the negative electrode sheet are bonded by the first adhesive layer and the second adhesive layer, the negative electrode sheet exerts an outward expansion force along its extending plane on the separator and the positive electrode sheet, and the positive electrode sheet and the separator exert a reaction force inward along its extending plane to inhibit expansion on the negative electrode sheet. In this embodiment, by designing the relationship among the peel strength Fc between the first adhesive layer and the positive electrode sheet, the coating amount per unit area Wc of the first adhesive layer on the substrate film, the peel strength Fa between the second adhesive layer and the negative electrode sheet, and the coating amount per unit area Wa of the second adhesive layer on the substrate film, such that 0.85≤(Fc·Wc)/(Fa·Wa)≤6.36, the negative electrode sheet expands more along its thickness direction (i.e, the lamination direction of the positive electrode sheet, the separator, and the negative electrode sheet) during lithiation, and the expansion of the negative electrode sheet along its extending plane is inhibited. This reduces the relative displacement between the negative electrode sheet, the separator, and the positive electrode sheet during lithiation, making the negative electrode sheet less prone to wrinkling, thereby enabling the battery to have a longer cycle life.

### BRIEF DESCRIPTION OF THE DRAWINGS

To more clearly illustrate the technical solutions of the embodiments of the present disclosure, the following will briefly introduce the drawings needed in the embodiments. Obviously, the drawings in the following description are only some embodiments of the present disclosure. For those of ordinary skill in the art, other drawings can be obtained according to these drawings without creative work.
Fig. 1 is a schematic structural diagram of a battery according to an embodiment of the present disclosure.
Fig. 2 is a cross-sectional structural diagram of the battery along the A-A direction in Fig. 1 according to an embodiment of the present disclosure.
Fig. 3 is a cross-sectional structural diagram of an electrode assembly according to an embodiment of the present disclosure.
Fig. 4 is a schematic diagram of the forces on the positive electrode sheet, the separator, and the negative electrode sheet according to an embodiment of the present disclosure.
Fig. 5 is a cross-sectional structural diagram of a positive electrode sheet according to an embodiment of the present disclosure.
Fig. 6 is a cross-sectional structural diagram of a negative electrode sheet according to an embodiment of the present disclosure.
Fig. 7 is a structural block diagram of an energy storage system according to an embodiment of the present disclosure.
Fig. 8 is an application scenario diagram of an energy storage system according to an embodiment of the present disclosure.
Fig. 9 is a schematic structural diagram of an energy storage device according to an embodiment of the present disclosure.

Explanation of reference numerals:100: Battery, 101: Electrode assembly, 110: Positive electrode sheet, 111: Positive current collector, 112: Positive active layer, 120: Separator, 121: Substrate film, 122: First adhesive layer, 123: Second adhesive layer, 130: Negative electrode sheet, 131: Negative current collector, 132: Negative active layer, 140: Housing, 141: Accommodating cavity, 150: End cap assembly, 200: Energy storage device, 210: Box body, 300: Energy storage system, 310: Electric energy conversion device.

### DETAILED DESCRIPTION

In order to enable those skilled in the art to better understand the solutions of the present disclosure, the technical solutions in the embodiments of the present disclosure will be clearly and completely described below with reference to the drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative work shall fall within the protection scope of the present disclosure.

The terms "first" and "second" in the description and claims of the present disclosure are used to distinguish different objects, not to describe a specific order. In addition, the terms "comprising" and "having" and any variations thereof are intended to cover non-exclusive inclusion. For example, a process, method, system, product, or device that comprises a series of steps or units is not limited to the listed steps or units, but optionally comprises unlisted steps or units, or optionally comprises other steps or units inherent to the process, method, product, or device.

The technical solutions in the embodiments of the present disclosure will be described below with reference to the drawings.

It should be noted that for the convenience of explanation, in the embodiments of the present disclosure, the same reference numerals represent the same components, and for the sake of brevity, the detailed description of the same components is omitted in different embodiments.

At present, green electric energy is generally generated relying on photovoltaic, wind power, water potential, and the like. However, wind energy and solar energy generally have the problems of strong intermittency and large volatility, which will cause grid instability-insufficient electricity during peak hours and excessive electricity during off-peak hours. Unstable voltage will cause loss of the power. Therefore, due to insufficient electricity demand or insufficient grid acceptance capacity, the problem of "abandoning wind and solar energy" may be caused. To solve these problems, energy storage is necessary. That is, electric energy is converted into other forms of energy for storage through physical or chemical means, and the energy is converted back into electric energy for release when needed. Simply put, energy storage is similar to a large "power bank"-storing electric energy when photovoltaic and wind energy are sufficient, and releasing the stored electricity when needed.

A battery is the smallest energy storage unit of an energy storage device and an energy storage system, and the performance of the battery directly affects the performance and application of the energy storage device and the energy storage system.

With the growing demand for large-capacity energy storage batteries, the coating thickness of battery electrode sheets is designed to be increasingly higher. This leads to an increasing range of thickness expansion and contraction of the negative electrode sheet during normal charge and discharge of the battery, which in turn causes wrinkles at the interface of the negative electrode sheet, thereby reducing the capacity and cycle life of the battery.

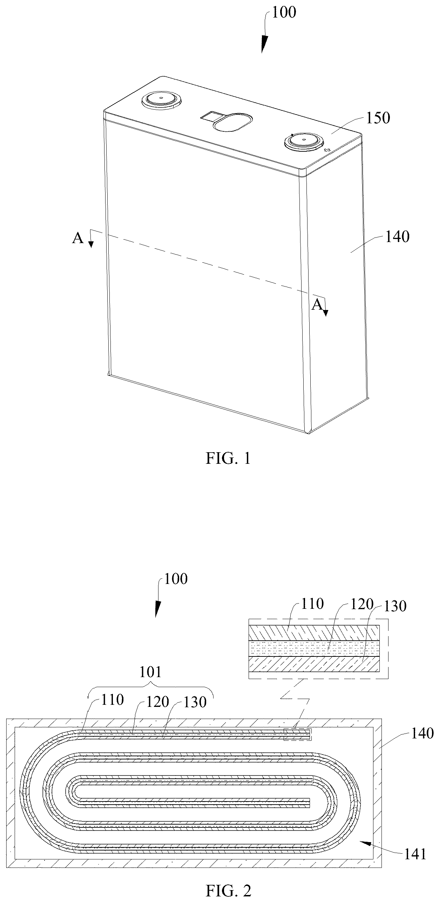

Please refer to Figs. 1 to 3. An embodiment of the present disclosure provides a battery 100. The battery 100 comprises a positive electrode sheet 110, a separator 120, and a negative electrode sheet 130. The separator 120 is disposed between the positive electrode sheet 110 and the negative electrode sheet 130. The separator 120 comprises a substrate film 121, a first adhesive layer 122, and a second adhesive layer 123. The first adhesive layer 122 is disposed between the substrate film 121 and the positive electrode sheet 110 for bonding the substrate film 121 to the positive electrode sheet 110, and the second adhesive layer 123 is disposed between the substrate film 121 and the negative electrode sheet 130 for bonding the substrate film 121 to the negative electrode sheet 130. The battery 100 satisfies the relationship: 0.85≤(Fc·Wc)/(Fa·Wa)≤6.36, where Fc is a peel strength between the first adhesive layer 122 and the positive electrode sheet 110, Wc is a coating amount per unit area of the first adhesive layer 122 on the substrate film 121, Fa is a peel strength between the second adhesive layer 123 and the negative electrode sheet 130, and Wa is a coating amount per unit area of the second adhesive layer 123 on the substrate film 121.

The battery 100 of the embodiment of the present disclosure can be applied to energy storage devices such as battery 100 modules (also referred to as energy storage modules), small energy storage boxes, and large energy storage cabinets. The energy storage device is used to store electric energy and can supply electrical loads such as street lamps and household appliances during peak electricity prices, or supply power when the power grid is cut off/powered off.

Optionally, the battery 100 may be, but not limited to, at least one of a lithium-ion battery 100, a sodium-ion battery 100, a magnesium-ion battery 100, and the like.

It can be understood that the positive electrode sheet 110, the separator 120, and the negative electrode sheet 130 are sequentially laminated to form the electrode assembly 101. The electrode assembly 101 may be, but not limited to, a wound structure, a laminated structure, and the like, which is not specifically limited in the present disclosure.

It can be understood that the first adhesive layer 122, the substrate film 121, and the second adhesive layer 123 are sequentially laminated. Before the electrode assembly 101 is wound, the positive electrode sheet 110, the first adhesive layer 122, the substrate film 121, the second adhesive layer 123, and the negative electrode sheet 130 are sequentially laminated.

Specifically, the value of (Fc·Wc)/(Fa·Wa) may be, but not limited to, 0.85, 0.9, 0.95, 1.0, 1.3, 1.5, 1.8, 2.0, 2.16, 2.3, 2.5, 2.8, 3.0, 3.3, 3.5, 3.8, 4.0, 4.3, 4.5, 4.8, 5.0, 5.3, 5.5, 5.8, 6.0, 6.2, 6.36, and the like. If (Fc·Wc)/(Fa·Wa) is too small, the bonding force between the separator 120 and the positive electrode sheet 110 is relatively weak, and the bonding force between the separator 120 and the negative electrode sheet 130 is relatively strong. During the contraction and expansion of the negative electrode sheet 130 during delithiation and lithiation, the expansion force of the negative electrode sheet 130 pulls the separator 120 to move, resulting in uneven stress on the negative electrode sheet 130 at corners or local areas, thereby making the negative electrode sheet 130 prone to wrinkling or bulging and reducing the capacity and cycle capacity retention rate of the battery 100. If (Fc·Wc)/(Fa·Wa) is too large, the bonding force between the positive electrode sheet 110 and the separator 120 is too strong, and the first adhesive layer 122 is likely to block the pores of the positive active layer on the surface of the positive electrode sheet 110, reducing the ion mobility of the positive active layer and the kinetic performance of the battery 100. When 0.85≤(Fc·Wc)/(Fa·Wa)≤6.36, the negative electrode sheet 130 is less prone to wrinkling, and the positive active layer has higher ion mobility, thereby enabling the battery 100 to have a longer cycle life and higher kinetic performance.

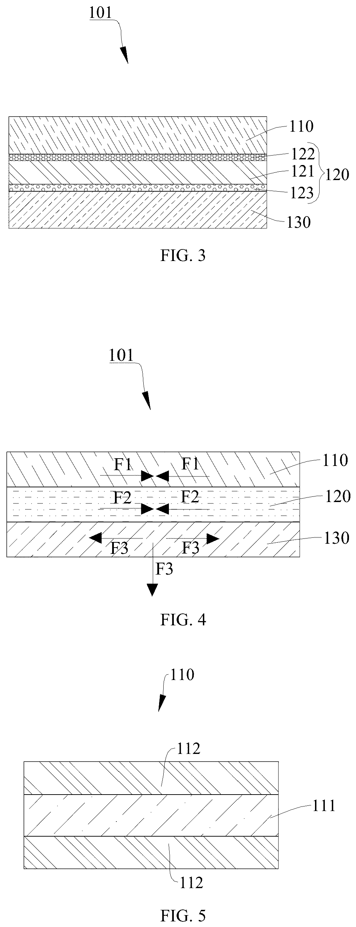

As shown in Fig. 4, during the charge and discharge cycles of the battery 100, the negative electrode sheet 130 continuously undergoes delithiation and lithiation. During the lithiation process of the negative electrode sheet 130, the negative electrode sheet 130 has an expansion force outward along its extending plane and an expansion force in the thickness direction. Since the positive electrode sheet 110, the separator 120, and the negative electrode sheet 130 are bonded by the first adhesive layer 122 and the second adhesive layer 123, the negative electrode sheet 130 exerts an outward expansion force along its extending plane on the separator 120 and the positive electrode sheet 110, and the positive electrode sheet 110 and the separator 120 exert a reaction force inward along its extending plane to inhibit expansion on the negative electrode sheet 130. In this embodiment, by designing the relationship between the peel strength Fc between the first adhesive layer 122 and the positive electrode sheet 110, the coating amount per unit area Wc of the first adhesive layer 122 on the substrate film 121, the peel strength Fa between the second adhesive layer 123 and the negative electrode sheet 130, and the coating amount per unit area Wa of the second adhesive layer 123 on the substrate film 121, such that 0.85≤(Fc·Wc)/(Fa·Wa)≤6.36, the negative electrode sheet 130 expands more along its thickness direction (i.e, the lamination direction of the positive electrode sheet 110, the separator 120, and the negative electrode sheet 130) during lithiation, and the expansion of the negative electrode sheet 130 along its extending plane is inhibited. This reduces the relative displacement between the negative electrode sheet 130, the separator 120, and the positive electrode sheet 110 during lithiation, making the negative electrode sheet 130 less prone to wrinkling, thereby enabling the battery 100 to have a longer cycle life.

In some embodiments, the battery 100 satisfies the relationship: 2.16≤(Fc·Wc)/(Fa·Wa)≤6.20. Specifically, the value of (Fc·Wc)/(Fa·Wa) may be, but not limited to, 2.16, 2.3, 2.5, 2.8, 3.0, 3.3, 3.5, 3.8, 4.0, 4.3, 4.5, 4.8, 5.0, 5.3, 5.5, 5.8, 6.0, 6.2, and the like. This can make the negative electrode sheet 130 less prone to wrinkling, and the positive active layer of the positive electrode sheet 110 has higher ion mobility, thereby enabling the battery 100 to have a longer cycle life and higher kinetic performance.

In some embodiments, the peel strength Fc between the first adhesive layer 122 and the positive electrode sheet 110 is in the range of Fc ≥ 2.1 N/m.

Specifically, the peel strength Fc between the first adhesive layer 122 and the positive electrode sheet 110 may be, but not limited to, 2.1 N/m, 2.3 N/m, 2.5 N/m, 2.8 N/m, 3.0 N/m, 3.3 N/m, 3.5 N/m, 3.8 N/m, 4.0 N/m, 4.3 N/m, 4.5 N/m, 4.8 N/m, 5.0 N/m, 5.3 N/m, 5.5 N/m, 5.8 N/m, 6.0 N/m, 6.3 N/m, 6.5 N/m, 6.8 N/m, 7.0 N/m, 7.5 N/m, 8.0 N/m, 8.5 N/m, 9.0 N/m, 9.5 N/m, 10.0 N/m, 10.5 N/m, 11.0 N/m, and the like.

In this embodiment, if the peel strength Fc between the first adhesive layer 122 and the positive electrode sheet 110 is too small, the restraint and inhibition effect of the positive electrode sheet 110 and the separator 120 on the lateral expansion of the negative electrode sheet 130 during lithiation is reduced, making the negative electrode sheet 130 prone to disordered expansion during lithiation. The negative electrode sheet 130 is prone to wrinkling during repeated charge and discharge, reducing the cycle life of the battery 100. When the peel strength Fc between the first adhesive layer 122 and the positive electrode sheet 110 is in the range of Fc ≥ 2.1 N/m, the probability of expansion of the negative electrode sheet 130 during repeated charge and discharge can be better reduced, and the cycle life of the battery 100 can be improved.

In some embodiments, the peel strength Fa between the second adhesive layer 123 and the negative electrode sheet 130 is in the range of Fa ≥ 0.5 N/m.

Specifically, the peel strength Fa between the second adhesive layer 123 and the negative electrode sheet 130 may be, but not limited to, 0.5 N/m, 0.53 N/m, 0.55 N/m, 0.58 N/m, 0.6 N/m, 0.63 N/m, 0.65 N/m, 0.68 N/m, 0.7 N/m, 1.0 N/m, 1.3 N/m, 1.5 N/m, 1.8 N/m, 2.0 N/m, 2.2 N/m, 2.3 N/m, 2.5 N/m, 2.8 N/m, 3.0 N/m, 3.2 N/m, 3.5 N/m, and the like.

In this embodiment, if the peel strength Fa between the second adhesive layer 123 and the negative electrode sheet 130 is too small, during the lithiation and expansion of the negative electrode sheet 130, the separator 120 cannot inhibit the expansion of the negative electrode sheet 130 along its extending plane (i.e, the plane perpendicular to the lamination direction of the positive electrode sheet 110, the separator 120, and the negative electrode sheet 130), resulting in disordered expansion of the negative electrode sheet 130 along its extending plane and thickness direction. The expansion of the negative electrode sheet 130 along its extending plane is likely to cause wrinkling of the negative electrode sheet 130. When the peel strength Fa between the second adhesive layer 123 and the negative electrode sheet 130 is ≥ 0.5 N/m, the expansion of the negative electrode sheet 130 along its extending plane during lithiation can be better avoided, thereby better reducing the probability of wrinkling of the negative electrode sheet 130 and improving the cycle life of the battery 100.

In some embodiments, the peel strength Fa between the second adhesive layer 123 and the negative electrode sheet 130 is in the range of 0.5 N/m ≤ Fa ≤ 2.2 N/m. When the peel strength Fa between the second adhesive layer 123 and the negative electrode sheet 130 is relatively large, the probability of wrinkling of the negative electrode sheet 130 can also be improved. However, if the peel strength Fa between the second adhesive layer 123 and the negative electrode sheet 130 is too large, during the lithiation process of the negative electrode sheet 130, the negative active layer of the negative electrode sheet 130 is prone to material shedding. During the long cycle of repeated charge and discharge of the battery 100, as the second adhesive layer 123 gradually ages, the risk of material shedding of the negative active layer of the negative electrode sheet 130 increases, thereby reducing the cycle life of the battery 100. When the peel strength between the second adhesive layer 123 and the negative electrode sheet 130 is in the range of 0.5 N/m≤Fa≤0.65 N/m, the negative electrode sheet 130 is not only less prone to wrinkling but also less prone to material shedding during repeated charge and discharge of the battery 100, which can better improve the cycle life of the battery 100.

In some embodiments, the coating amount per unit area Wc of the first adhesive layer 122 on the substrate film 121 is in the range of 0.1 g/m² ≤ Wc ≤ 0.65 g/m².

Specifically, the coating amount per unit area Wc of the first adhesive layer 122 on the substrate film 121 may be, but not limited to, 0.1 g/m², 0.13 g/m², 0.15 g/m², 0.18 g/m², 0.2 g/m², 0.23 g/m², 0.25 g/m², 0.28 g/m², 0.3 g/m², 0.33 g/m², 0.35 g/m², 0.38 g/m², 0.4 g/m², 0.43 g/m², 0.45 g/m², 0.48 g/m², 0.5 g/m², 0.53 g/m², 0.55 g/m², 0.58 g/m², 0.6 g/m², 0.63 g/m², 0.65 g/m², and the like.

In this embodiment, if the coating amount per unit area Wc of the first adhesive layer 122 on the substrate film 121 is too small, the restraint of the positive electrode sheet 110 on the separator 120 is too small. During the delithiation and lithiation of the negative electrode sheet 130, the separator 120 is easily pulled to move by the negative electrode sheet 130, making the separator 120 and the negative electrode sheet 130 prone to wrinkling. If the coating amount per unit area Wc of the first adhesive layer 122 on the substrate film 121 is too large, the first adhesive layer 122 is prone to material shedding, reducing the cycle performance of the battery 100.

Optionally, the coating amount per unit area Wa of the second adhesive layer 123 on the substrate film 121 is in the range of 0.1 g/m² ≤Wa≤ 0.65 g/m².

Specifically, the coating amount per unit area Wa of the second adhesive layer 123 on the substrate film 121 may be, but not limited to, 0.1 g/m², 0.13 g/m², 0.15 g/m², 0.18 g/m², 0.2 g/m², 0.23 g/m², 0.25 g/m², 0.28 g/m², 0.3 g/m², 0.33 g/m², 0.35 g/m², 0.38 g/m², 0.4 g/m², 0.43 g/m², 0.45 g/m², 0.48 g/m², 0.5 g/m², 0.53 g/m², 0.55 g/m², 0.58 g/m², 0.6 g/m², 0.63 g/m², 0.65 g/m², and the like.

In this embodiment, if the coating amount per unit area Wa of the second adhesive layer 123 on the substrate film 121 is too small, the restraint of the separator 120 on the negative electrode sheet 130 is too small. During the delithiation and lithiation of the negative electrode sheet 130, the inhibition effect of the separator 120 on the lateral expansion of the negative electrode sheet 130 (i.e, along its extending plane) is reduced, increasing the probability of disordered expansion of the negative electrode sheet 130 during lithiation and making the negative electrode sheet 130 prone to wrinkling. If the coating amount per unit area Wa of the second adhesive layer 123 on the substrate film 121 is too large, during the lithiation process of the negative electrode sheet 130, the negative active layer of the negative electrode sheet 130 is prone to material shedding. During the long cycle of repeated charge and discharge of the battery 100, as the second adhesive layer 123 gradually ages, the risk of material shedding of the negative active layer of the negative electrode sheet 130 increases, thereby reducing the cycle life of the battery 100.

In some embodiments, both the first adhesive layer 122 and the second adhesive layer 123 comprise an adhesive. If the total mass percentage of the adhesive in the first adhesive layer 122 and the second adhesive layer 123 is P%, the battery 100 further satisfies the relationship: 0.05 ≤(Fc·Wa)/(Fa·Wc·P)≤ 1.39.

Optionally, the mass percent of the adhesive in the first adhesive layer 122 is equal to that in the second adhesive layer 123.

Specifically, the value of (Fc·Wa)/(Fa·Wc·P) may be, but not limited to, 0.05, 0.08, 0.1, 0.2, 0.3, 0.4, 0.5, 0.6, 0.7, 0.8, 0.9, 1.0, 1.1, 1.2, 1.3, 1.39, and the like.

In this embodiment, if (Fc·Wa)/(Fa·Wc·P) is too small, the bonding between the separator 120 and the negative electrode sheet 130 is too firm, making the negative active layer of the negative electrode sheet 130 prone to material shedding during the delithiation and lithiation of the negative electrode sheet 130. If (Fc·Wa)/(Fa·Wc·P) is too large, the bonding between the separator 120 and the positive electrode sheet 110 is too firm, and the first adhesive layer 122 is easily adhered to the surface of the positive electrode sheet 110. When 0.05 ≤(Fc·Wa)/(Fa·Wc·P)≤ 1.39, the negative electrode sheet 130 is not only less prone to wrinkling but also less prone to material shedding during repeated charge and discharge, thereby improving the cycle life of the battery 100.

In some embodiments, the battery 100 further satisfies the relationship: 0.05≤(Fc·Wa)/(Fa·Wc·P)≤0.86. Specifically, the value of (Fc·Wa)/(Fa·Wc·P) may be, but not limited to, 0.05, 0.08, 0.1, 0.2, 0.3, 0.4, 0.5, 0.6, 0.7, 0.8, 0.86, and the like. This can make the negative electrode sheet 130 less prone to wrinkling and material shedding during repeated charge and discharge, thereby improving the cycle life of the battery 100.

In some embodiments, the total mass percentage P% of the adhesive in the first adhesive layer 122 and the second adhesive layer 123 is in the range of 2% ≤ P% ≤ 25%.

Specifically, the total mass percentage P% of the adhesive in the first adhesive layer 122 and the second adhesive layer 123 may be, but not limited to, 2%, 4%, 6%, 8%, 10%, 12%, 14%, 16%, 18%, 20%, 22%, 24%, 25%, and the like.

In this embodiment, if the total mass percentage P% of the adhesive in the first adhesive layer 122 and the second adhesive layer 123 is too low, the bonding between the first adhesive layer 122 and the substrate film 121 as well as the positive electrode sheet 110 is not firm, and the separator 120 is prone to wrinkling, thereby causing the negative electrode sheet 130 to wrinkle. Similarly, the bonding between the second adhesive layer 123 and the substrate film 121 as well as the negative electrode sheet 130 is not firm, and the second adhesive layer 123 is prone to wrinkling. If the total mass percentage P% of the adhesive in the first adhesive layer 122 and the second adhesive layer 123 is too high, the cost of the first adhesive layer 122 and the second adhesive layer 123 is increased, and the bonding force of the first adhesive layer 122 and the second adhesive layer 123 is too strong. When the bonding between the separator 120 and the negative electrode sheet 130 is too firm, the negative active layer of the negative electrode sheet 130 is prone to material shedding during the delithiation and lithiation of the negative electrode sheet 130. When the bonding between the separator 120 and the positive electrode sheet 110 is too firm, the first adhesive layer 122 is easily adhered to the surface of the positive electrode sheet 110.

Optionally, the mass percent of the adhesive in the first adhesive layer 122 is in the range of 2% to 25%. Specifically, the mass percent of the adhesive in the first adhesive layer 122 may be, but not limited to, 2%, 4%, 6%, 8%, 10%, 12%, 14%, 16%, 18%, 20%, 22%, 24%, 25%, and the like. If the mass percent of the adhesive in the first adhesive layer 122 is too low, the bonding between the first adhesive layer 122 and the substrate film 121 as well as the positive electrode sheet 110 is not firm, and the separator 120 is prone to wrinkling, thereby causing the negative electrode sheet 130 to wrinkle. If the mass percent of the adhesive in the first adhesive layer 122 is too high, the cost of the first adhesive layer 122 is increased, and the bonding force of the first adhesive layer 122 is too strong. The bonding between the separator 120 and the positive electrode sheet 110 is too firm, and the first adhesive layer 122 is easily adhered to the surface of the positive electrode sheet 110.

Optionally, the mass percent of the adhesive in the second adhesive layer 123 is in the range of 2% to 25%. Specifically, the mass percent of the adhesive in the second adhesive layer 123 may be, but not limited to, 2%, 4%, 6%, 8%, 10%, 12%, 14%, 16%, 18%, 20%, 22%, 24%, 25%, and the like. If the mass percent of the adhesive in the second adhesive layer 123 is too low, the bonding between the second adhesive layer 123 and the substrate film 121 as well as the negative electrode sheet 130 is not firm, and the second adhesive layer 123 is prone to wrinkling. If the mass percent of the adhesive in the second adhesive layer 123 is too high, the cost of the second adhesive layer 123 is increased, and the bonding force of the second adhesive layer 123 is too strong. The bonding between the separator 120 and the negative electrode sheet 130 is too firm, making the negative active layer of the negative electrode sheet 130 prone to material shedding during the delithiation and lithiation of the negative electrode sheet 130.

Optionally, the adhesive comprises polar groups. This can make the first adhesive layer 122 and the second adhesive layer 123 have a more suitable bonding force, thereby better preventing the negative electrode sheet 130 from wrinkling during charge and discharge and preventing the first adhesive layer 122 and the second adhesive layer 123 from material shedding.

Optionally, the polar groups may be, but not limited to, at least one of hydroxyl (-OH), carboxyl (-COOH), maleic anhydride group (-COOOC-), sulfonate group (-SO3H), and pyrrolidone group (-NCO-).

Optionally, the adhesive may comprise, but not limited to, at least one of polyvinylidene fluoride, polyvinylidene fluoride-co-hexafluoropropylene, polyvinylidene fluoride-co-trichloroethylene, polymethyl methacrylate, polyacrylonitrile, polyvinyl acetate, polyethylene-co-vinyl acetate, polyimide, polyoxyethylene, cyanoethyl pullulan, cyanoethyl polyvinyl alcohol, cyanoethyl cellulose, cyanoethyl sucrose, carboxymethyl cellulose, polyvinyl alcohol, polyacrylic acid, polymaleic anhydride, or polyvinylpyrrolidone. Using these adhesives can make the first adhesive layer 122 and the second adhesive layer 123 have a more suitable bonding force, thereby better preventing the negative electrode sheet 130 from wrinkling during charge and discharge and preventing the first adhesive layer 122 and the second adhesive layer 123 from material shedding.

Optionally, the first adhesive layer 122 and the second adhesive layer 123 further comprise a main bonding material.

Optionally, the main bonding material may be, but not limited to, polyvinylidene fluoride (PVDF), functional poly(norbornene-co-norbornene dicarboxylic acid-co-heptafluorobutyl norbornenimide) (PNCI-based adhesive), styrene butadiene rubber (SBR), fluorinated polyimide (FPI), polyimide-siloxane (PIS), polyacrylonitrile (PAN), and the like.

It should be noted that before the formation of the first adhesive layer 122 and the second adhesive layer 123, the main bonding material exists in the form of particles. The adhesive is dissolved in a solvent to disperse the main bonding material and make the main bonding material uniformly distributed on the surface of the substrate film 121. The main bonding material mainly plays a role in bonding the substrate film 121 to the positive electrode sheet 110 and the substrate film 121 to the negative electrode sheet 130.

Optionally, the mass percent of the main bonding material in the first adhesive layer 122 is in the range of 70% to 95%. Specifically, the mass percent of the main bonding material in the first adhesive layer 122 may be, but not limited to, 70%, 73%, 75%, 78%, 80%, 83%, 85%, 88%, 90%, 93%, 95%, and the like. If the mass percent of the main bonding material in the first adhesive layer 122 is too low, it is not conducive to the effective bonding between the substrate film 121 and the positive electrode sheet 110. If the mass percent of the main bonding material in the first adhesive layer 122 is too high, it is not conducive to the dispersion of the main bonding material, resulting in uneven distribution of the main bonding material in the first adhesive layer 122, which also affects the bonding between the substrate film 121 and the positive electrode sheet 110.

Optionally, the mass percent of the main bonding material in the second adhesive layer 123 is in the range of 70% to 95%. Specifically, the mass percent of the main bonding material in the second adhesive layer 123 may be, but not limited to, 70%, 73%, 75%, 78%, 80%, 83%, 85%, 88%, 90%, 93%, 95%, and the like. If the mass percent of the main bonding material in the second adhesive layer 123 is too low, it is not conducive to the effective bonding between the substrate film 121 and the negative electrode sheet 130. If the mass percent of the main bonding material in the second adhesive layer 123 is too high, it is not conducive to the dispersion of the main bonding material, resulting in uneven distribution of the main bonding material in the second adhesive layer 123, which also affects the bonding between the substrate film 121 and the negative electrode sheet 130.

Optionally, the substrate film 121 may be, but not limited to, at least one of a polypropylene microporous film (referred to as PP film), a polyethylene microporous film (referred to as PE film), a ceramic substrate film 121, a polyethylene-polypropylene (PP/PE) composite microporous film, a polyolefin microporous film, and the like.

Optionally, the separator 120 further comprises an aluminum oxide ceramic coating (referred to as CCS coating). The aluminum oxide ceramic coating may be disposed between the substrate film 121 and the first adhesive layer 122 and/or between the substrate film 121 and the second adhesive layer 123.

Optionally, the CCS coating comprises an inorganic oxide (such as a high-temperature resistant inorganic oxide) and sodium carboxymethyl cellulose.

Optionally, the porosity of the substrate film 121 is in the range of 20% to 65%, for example, but not limited to, 20%, 30%, 40%, 50%, 60%, 65%, and the like.

Optionally, the thickness of the substrate film 121 is 7 µm to 20 µm. Specifically, the thickness of the substrate film 121 may be, but not limited to, 7 µm, 8 µm, 9 µm, 10 µm, 11 µm, 12 µm, 13 µm, 14 µm, 14.5 µm, 15 µm, 15.5 µm, 16 µm, 16.5 µm, 17 µm, 17.5 µm, 18 µm, 20 µm, and the like.

Optionally, the width of the substrate film 121 is in the range of 200 mm to 800 mm. Specifically, the width of the substrate film 121 may be, but not limited to, 200 mm, 300 mm, 400 mm, 500 mm, 600 mm, 700 mm, 800 mm, and the like. The width of the substrate film 121 can be designed according to the size of the battery 100.

Please refer to Fig. 5. Optionally, the positive electrode sheet 110 comprises a positive current collector 111 and a positive active layer 112. The positive active layer 112 is disposed on the surface of the positive current collector 111. It can be understood that the positive active layer 112 may cover one surface or two opposite surfaces of the positive current collector 111.

Optionally, the positive current collector 111 may be, but not limited to, an aluminum sheet.

Optionally, the positive active layer 112 comprises a positive active material, a positive conductive agent, a positive binder, and a positive thickener.

Optionally, the positive active material may be, but not limited to, at least one of lithium cobalt oxide, lithium nickel cobalt manganese oxide, lithium nickel cobalt aluminum oxide, lithium manganese oxide, lithium manganese iron phosphate, lithium vanadium phosphate, lithium vanadium oxyphosphate, lithium iron phosphate, lithium titanate, and lithium-rich manganese-based materials.

Optionally, the positive conductive agent may be, but not limited to, at least one of conductive carbon black, acetylene black, carbon nanotubes, carbon fibers, graphene, and the like.

Optionally, the positive binder may be, but not limited to, at least one of polyvinylidene fluoride (PVDF), polyamide (PA), polyacrylonitrile (PAN), polyacrylate, polyvinyl ether, polymethyl methacrylate (PMMA), polyhexafluoropropylene, polymerized styrene butadiene rubber (SBR), and the like.

Optionally, in the positive active layer 112, the mass percent of the positive binder is in the range of 2wt% to 4wt%. Specifically, in the positive active layer 112, the mass percent of the positive binder may be, but not limited to, 2wt%, 2.5wt%, 3wt%, 3.5wt%, 4wt%, and the like. If the mass percent of the positive binder is too small, the positive active layer 112 is prone to pulverization or shedding. If the mass percent of the positive binder is too large, the energy density of the positive electrode sheet 110 is reduced.

Optionally, the positive thickener may be, but not limited to, at least one of sodium carboxymethyl cellulose (CMC), polyacrylamide (PAM), and polymethacrylate (PMA), and the like.

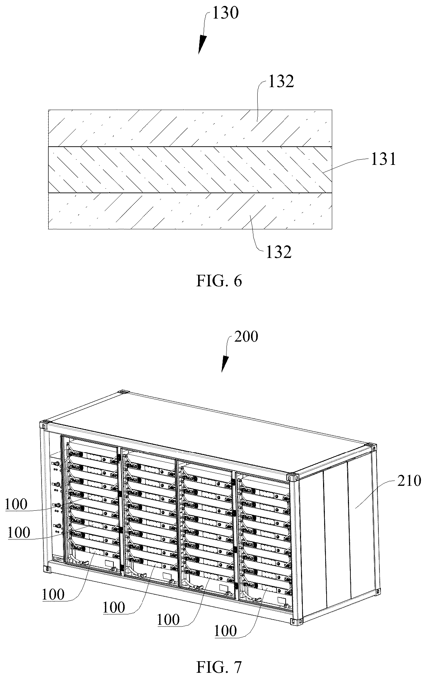

Please refer to Fig. 6. Optionally, the negative electrode sheet 130 comprises a negative current collector 131 and a negative active layer 132. The negative active layer 132 is disposed on the surface of the negative current collector 131. It can be understood that the negative active layer 132 may cover one surface or two opposite surfaces of the negative current collector 131.

Optionally, the negative current collector 131 may be, but not limited to, a copper sheet.

Optionally, the negative active layer 132 comprises a negative active material, a negative conductive agent, a negative binder, and a negative thickener.

Optionally, the negative active material may be, but not limited to, graphite.

Optionally, the negative conductive agent may be, but not limited to, at least one of conductive carbon black (SP), acetylene black, carbon nanotubes, carbon fibers, graphene, and the like.

Optionally, the negative binder may be, but not limited to, at least one of polyvinylidene fluoride, polyamide, polyacrylonitrile, polyacrylate, polyvinyl ether, polymethyl methacrylate, polyhexafluoropropylene, styrene butadiene rubber, and the like.

Optionally, in the negative active layer 132, the mass percent of the negative binder is in the range of 2wt% to 4wt%. Specifically, in the negative active layer 132, the mass percent of the negative binder may be, but not limited to, 2wt%, 2.5wt%, 3wt%, 3.5wt%, 4wt%, and the like. If the mass percent of the negative binder is too small, the negative active layer 132 is prone to pulverization or shedding. If the mass percent of the negative binder is too large, the energy density of the negative electrode sheet 130 is reduced.

Optionally, the negative thickener may be, but not limited to, at least one of sodium carboxymethyl cellulose (CMC), polyacrylamide (PAM), and polymethacrylate (PMA), and the like.

Please refer to Figs. 1 and 2 again. Optionally, the battery 100 further comprises a housing 140 and an end cap assembly 150. The housing 140 and the end cap assembly 150 enclose an accommodating cavity 141. The accommodating cavity 141 is used to accommodate the positive electrode sheet 110, the separator 120, and the negative electrode sheet 130.

In some embodiments, the battery 100 further comprises an electrolyte. The electrolyte is disposed in the accommodating cavity 141 and at least wets part of the positive electrode sheet 110 and the negative electrode sheet 130.

Optionally, the electrolyte comprises an electrolyte salt, an organic solvent, and a film-forming additive.

Optionally, the electrolyte salt may comprise, but not limited to, lithium salts, sodium salts, and the like.

Optionally, the lithium salt may comprise, but not limited to, at least one of lithium hexafluorophosphate (LiPF6), lithium tetrafluoroborate (LiBF4), lithium bis(fluorosulfonyl)imide (LiFSI), lithium bis(trifluoromethanesulfonyl)imide (LiTFSI), lithium bis(oxalato)borate (LiBOB), lithium difluoro(oxalato)phosphate (LiODFP), lithium difluorooxalatoborate (LiODFB), lithium difluorophosphate (LiPO2F2), lithium trifluoromethanesulfonate (CF3SO3Li), and the like.

Optionally, the sodium salt may comprise, but not limited to, at least one of sodium hexafluorophosphate (NaPF6), sodium tetrafluoroborate (NaBF4), sodium bis(fluorosulfonyl)imide (NaFSI), sodium bis(trifluoromethanesulfonyl)imide (NaTFSI), sodium bis(oxalato)borate (NaBOB), sodium difluoro(oxalato)phosphate (NaODFP), sodium difluorooxalatoborate (NaODFB), sodium difluorophosphate (NaPO2F2), sodium trifluoromethanesulfonate (CF3SO3Na), and the like.

Optionally, the molar concentration M of the electrolyte salt in the electrolyte is in the range of 0.7 mol/L ≤ M ≤ 1.4 mol/L. The molar concentration M of the electrolyte salt in the electrolyte may be, but not limited to, 0.7 mol/L, 0.8 mol/L, 0.9 mol/L, 1.0 mol/L, 1.1 mol/L, 1.2 mol/L, 1.3 mol/L, 1.4 mol/L, and the like. If the molar concentration M of the electrolyte salt is too small, the concentration of free ions in the electrolyte is too low, reducing the conductivity of the electrolyte and thus the kinetic performance of the battery 100. If the molar concentration M of the electrolyte salt is too large, a part of the electrolyte salt is likely to be undissociated, and the viscosity of the electrolyte is increased, which instead reduces the conductivity of the electrolyte and also reduces the kinetic performance of the battery 100. When the molar concentration M of the electrolyte salt in the electrolyte is in the range of 0.7 mol/L ≤ M ≤ 1.4 mol/L, the electrolyte can have high conductivity, thereby enabling the battery 100 to have good kinetic performance.

Optionally, the organic solvent comprises at least one of cyclic carbonates and linear carbonates. Cyclic carbonates have high dielectric constant and high ionic conductivity, and can form a stable SEI film on the surface of the negative electrode sheet 130, but their viscosity is relatively large. Linear carbonates have lower viscosity than cyclic carbonates and better electrochemical stability, and can improve the low-temperature performance of the electrolyte. Therefore, when a mixed solvent of cyclic carbonates and linear carbonates is used, the electrolyte can have a suitable viscosity and low-temperature stability, and the battery 100 using the electrolyte can form a better film.

Optionally, the cyclic carbonate may comprise, but not limited to, at least one of ethylene carbonate (EC), propylene carbonate (PC), and the like. The dielectric constant of ethylene carbonate is much higher than that of propylene carbonate, and ethylene carbonate can better promote the formation of the SEI film.

Optionally, the linear carbonate may comprise, but not limited to, at least one of dimethyl carbonate (DMC), diethyl carbonate (DEC), ethyl methyl carbonate (EMC), and the like.

Optionally, in the electrolyte, the mass percent of the organic solvent is 60wt% to 85wt%. Specifically, it may be, but not limited to, 60wt%, 65wt%, 70wt%, 75wt%, 80wt%, 85wt%, and the like.

Optionally, the organic solvent further comprises at least one of ethyl acetate, propyl acetate, ethyl propionate, propyl propionate, γ-butyrolactone, and 2,2-difluoroethyl acetate.

Optionally, the film-forming additive comprises at least one of fluoroethylene carbonate (FEC), vinyl sulfate (DTD), vinylene carbonate (VC), vinyl ethylene carbonate (VEC), tris(trimethylsilyl) phosphate, tris(trimethylsilyl) borate, adiponitrile, succinonitrile, and 1,3,6-hexanetricarbonitrile.

Optionally, the mass percent of the film-forming additive is in the range of 0.3% to 3%. Specifically, the mass percent of the film-forming additive may be, but not limited to, 0.3%, 0.5%, 0.8%, 1.0%, 1.3%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, and the like.

The battery 100 of the present disclosure will be further described below through specific examples.

### Examples 1 to 15, Comparative Examples 1 to 7

The batteries 100 of each example and comparative example were prepared through the following steps:
(1) Preparation of electrolyte: In an environment with water content less than 10 ppm, lithium hexafluorophosphate was dissolved in a mixed solvent of fluoroethylene carbonate (FEC), ethylene carbonate (EC), dimethyl carbonate (DMC), and diethyl carbonate (DEC) with a mass ratio of 1:1:1:1 to form an electrolyte, where the molar concentration of lithium hexafluorophosphate in the electrolyte was 1 mol/L.
(2) Preparation of positive electrode sheet 110: Lithium iron phosphate (positive active material), acetylene black (positive conductive agent), polyvinylidene fluoride (positive binder), and a surfactant were dissolved in N-methylpyrrolidone (NMP) solution at a weight ratio of 94:2:3:1 to prepare positive electrode slurry. An aluminum foil was used as the positive current collector 111, and the positive electrode slurry was coated on the positive current collector 111. After drying, the positive electrode sheet 110 was obtained. The single-side coating weight of the positive electrode sheet 110 was 320 g/1540.25 mm², and the double-side coating weight was 640 g/1540.25 mm².
(3) Preparation of negative electrode sheet 130: Graphite was used as the negative active material. Graphite, acetylene black (negative conductive agent), styrene butadiene rubber (SBR, negative binder), sodium carboxymethyl cellulose (CMC, negative thickener), and polyvinyl alcohol-based water-based adhesive were dissolved in deionized water at a ratio of 95.0:1.5:1.4:2.1 and stirred to obtain negative electrode slurry. A copper foil was used as the negative current collector 131, and the negative electrode slurry was coated on the negative current collector 131. After drying, cold pressing, and die cutting, the graphite negative electrode sheet 130 was obtained. The single-side coating weight of the negative electrode sheet 130 was 160 g/1540.25 mm², and the double-side coating weight was 320 g/1540.25 mm².
(4) Preparation of separator 120: A polyethylene film was used as the substrate film 121. A first adhesive layer 122 and a second adhesive layer 123 were respectively formed on the two opposite surfaces of the substrate film 121. The mass percents of the adhesive in the first adhesive layer 122 and the second adhesive layer 123 were equal. The coating amounts of the first adhesive layer and the second adhesive layer 123, and the content of the adhesive in the first adhesive layer 122 and the second adhesive layer 123 are shown in Table 1 below.
(5) Assembly of battery 100: The positive electrode sheet 110, the separator 120, and the negative electrode sheet 130 were stacked in sequence, with the separator 120 placed between the positive electrode sheet 110 and the negative electrode sheet 130 to play an isolation role. After being wound into a jelly roll, it was hot-pressed. The hot-pressed jelly roll was placed into an aluminum shell, and moisture was removed at 100°C to obtain a dry electrode assembly 101. After hot pressing, the battery 100 was fabricated through processes such as electrolyte injection, vacuum packaging, standing, formation, and shaping.

The following performance tests were performed on the batteries 100 of each example and comparative example:
(1) Peel strength test: The battery 100 was fully charged and then fully discharged (i.e, all electricity was discharged). The battery 100 was disassembled, the electrode assembly 101 was taken out, and the peel strengths between the first adhesive layer 122 and the positive electrode sheet 110, and between the second adhesive layer 123 and the negative electrode sheet 130 were respectively tested using an HY-0580 universal tensile testing machine.
(2) Wrinkle and material shedding test: The battery 100 was subjected to a charge-discharge cycle test on a charge-discharge instrument (Xingyun Charge-Discharge Testing System-BAT-NEEFLCT-05300-V010) at a test temperature of 25°C, a cycle rate of 1C (i.e, both the charging rate and the discharging rate were 1C), and a charging voltage of 2.5V to 3.65V. After 10 charge-discharge cycles, the battery 100 was disassembled to observe the wrinkles of the negative electrode sheet 130 and the material shedding of the negative electrode sheet 130 or the first adhesive layer 122.

The test results of each example and comparative example are shown in Table 1 below.

**Table 1 Performance parameters of the batteries 100 of each Example and Comparative Example**

| Example | Separator Coating | | | Peel Strength /N·m⁻¹ | | The value of (Fc·Wc )/(Fa· Wa) | The value of (Fc·Wa)/ (Fa.Wc-P) | Interface State | |
|---|---|---|---|---|---|---|---|---|---|
| | Wc (g/m 2) | Wa (g/m²) | P | Fc | Fa | | | Wrinkle of Negative Electrode Sheet | Material Shedding |
| Example 1 | 0.5 | 0.5 | 25 | 3.8 | 1.62 | 2.35 | 0.09 | No wrinkles | No shedding |
| Example 2 | 0.5 | 0.5 | 14 | 3.4 | 1.1 | 3.09 | 0.22 | No wrinkles | No shedding |
| Example 3 | 0.5 | 0.5 | 13 | 3.1 | 1.08 | 2.87 | 0.22 | No wrinkles | No shedding |
| Example 4 | 0.5 | 0.5 | 3 | 1.8 | 0.5 | 3.6 | 1.20 | No wrinkles | No shedding |
| Example 5 | 0.6 | 0.6 | 25 | 4.2 | 1.8 | 2.33 | 0.09 | No wrinkles | No shedding |
| Example 6 | 0.55 | 0.6 | 22 | 3.8 | 1.61 | 2.16 | 0.12 | No wrinkles | No shedding |
| Example 7 | 0.6 | 0.6 | 13 | 3.4 | 1.23 | 2.76 | 0.21 | No wrinkles | No shedding |
| Example 8 | 0.6 | 0.6 | 3 | 2.1 | 0.33 | 6.36 | 2.12 | Slight wrinkles | Slight shedding of negative electrode sheet |
| Example 9 | 0.65 | 0.35 | 25 | 5.3 | 2.2 | 4.47 | 0.05 | No wrinkles | No shedding |
| Example 10 | 0.65 | 0.35 | 2 | 4.5 | 1.65 | 5.06 | 0.73 | No wrinkles | No shedding |
| Example 11 | 0.65 | 0.35 | 13 | 3.82 | 1.32 | 5.37 | 0.12 | No wrinkles | No shedding |
| Example 12 | 0.65 | 0.35 | 3 | 2.17 | 0.65 | 6.2 | 0.60 | No wrinkles | No shedding |
| Example 13 | 0.65 | 0.35 | 2 | 1.6 | 0.5 | 5.94 | 0.86 | No wrinkles | No shedding |
| Example 14 | 0.35 | 0.65 | 25 | 1.1 | 0.7 | 0.85 | 0.12 | No wrinkles | No shedding |
| Example 15 | 0.35 | 0.65 | 2 | 0.9 | 0.6 | 0.81 | 1.39 | No wrinkles | Slight shedding of negative electrode sheet |
| Comparative Example 1 | 0 | 0 | 0 | 0 | 0 | / | / | Severe wrinkles | No shedding |
| Comparative Example 2 | 0.5 | 0.5 | 2 | 1.81 | 0.25 | 7.24 | 3.62 | Severe wrinkles | No shedding |
| Comparative Example 3 | 0.6 | 0.6 | 2 | 2.1 | 0.2 | 10.5 | 5.25 | Relatively severe wrinkles | No shedding |
| Comparative Example 4 | 0.5 | 0 | 25 | 3.9 | 0 | / | / | Slight wrinkles | No shedding |
| Comparative Example 5 | 0.5 | 0 | 2 | 1.85 | 0 | / | / | Severe wrinkles | No shedding |
| Comparative Example 6 | 0.6 | 0 | 25 | 4.5 | 0 | / | / | Slight wrinkles | No shedding |
| Comparative Example 7 | 0.6 | 0 | 2 | 2.1 | 0 | / | / | Severe wrinkles | No shedding |

(3) Cycle performance test at 25°C for 500 cycles: The battery 100 was subjected to a charge-discharge cycle test on a charge-discharge instrument (Xingyun Charge-Discharge Testing System-BAT-NEEFLCT-05300-V010) at a test temperature of 25°C, a cycle rate of 1C (i.e, both the charging rate and the discharging rate were 1C), and a charging voltage of 2.5V to 3.65V. The capacity retention rate after 500 cycles was calculated. The cycle capacity retention rates of the batteries 100 of each example and comparative example after 500 cycles at 25°C and a charge-discharge rate of 1C are shown in Table 2 below.

The formula for calculating the capacity retention rate after 500 cycles at 25°C is: 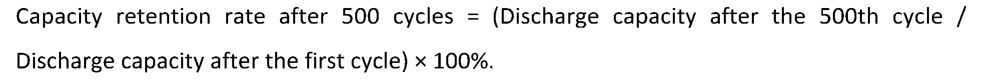 Capacity retention rate after 500 cycles = (Discharge capacity after the 500th cycle / Discharge capacity after the first cycle) × 100%.

**Table 2 Performance parameters of the batteries 100 of each Example and Comparative Example**

| Example | Capacity Retention Rate after 500 Cycles |
|---|---|
| Example 1 | 98.49% |
| Example 2 | 98.51% |
| Example 3 | 98.51% |
| Example 4 | 98.56% |
| Example 5 | 98.46% |
| Example 6 | 98.41% |
| Example 7 | 98.42% |
| Example 8 | 98.32% |
| Example 9 | 98.39% |
| Example 10 | 98.45% |
| Example 11 | 98.38% |
| Example 12 | 98.50% |
| Example 13 | 98.44% |
| Example 14 | 98.29% |
| Example 15 | 98.26% |
| Comparative Example 1 | 97.96% |
| Comparative Example 2 | 98.16% |
| Comparative Example 3 | 98.22% |
| Comparative Example 4 | 98.25% |
| Comparative Example 5 | 98.15% |
| Comparative Example 6 | 98.20% |
| Comparative Example 7 | 98.20% |

From the test results in Table 1, it can be seen that when the first adhesive layer 122 and the second adhesive layer 123 were not provided in Comparative Example 1, the negative electrode sheet 130 of the battery 100 had severe wrinkles but no material shedding. In addition, the battery 100 of Comparative Example 1 had a low capacity retention rate after 500 cycles. From the test results of Examples 1 to 4, it can be seen that when the coating amounts of the first adhesive layer 122 and the second adhesive layer 123 were the same, as the content of the adhesive in the first adhesive layer 122 and the second adhesive layer 123 increased, both the peel strength Fc between the first adhesive layer 122 and the positive electrode sheet 110 and the peel strength Fa between the second adhesive layer 123 and the negative electrode sheet 130 gradually increased, and the cycle capacity retention rate of the battery 100 after 500 cycles gradually increased. In addition, (Fc·Wc)/(Fa·Wa) of Examples 1 to 4 were all between 0.85 and 6.36, and (Fc·Wa)/(Fa·Wc·P) were all between 0.05 and 1.39.

From the test results of Examples 1 to 15, it can be seen that no matter how the peel strength Fc between the first adhesive layer 122 and the positive electrode sheet 110, the coating amount per unit area Wc of the first adhesive layer 122 on the substrate film 121, the peel strength Fa between the second adhesive layer 123 and the negative electrode sheet 130, and the coating amount per unit area Wa of the second adhesive layer 12

From the test results of Example 1 to Example 15, it can be seen that regardless of how the peel strength Fc between the first adhesive layer 122 and the positive electrode plate 110, the coating amount Wc per unit area of the first adhesive layer 122 on the base film 121, the peel strength Fa between the second adhesive layer 123 and the negative electrode plate 130, and the coating amount Wa per unit area of the second adhesive layer 123 on the base film 121 are adjusted, as long as (Fc·Wc)/(Fa·Wa) is between 0.85 and 6.36, the negative electrode plate 130 of the battery 100 will not have wrinkles, and the battery 100 maintains a high cycle capacity retention rate after 500 cycles. From the test results of Comparative Example 2 and Comparative Example 3, it can be seen that when (Fc·Wc)/(Fa·Wa) is greater than 6.36, the negative electrode plate 130 of the battery 100 will have severe wrinkles, and the cycle capacity retention rate of the battery 100 after 500 cycles decreases. In Example 8, (Fc·Wc)/(Fa·Wa)=6.36; therefore, the negative electrode plate 130 of the battery 100 will have slight wrinkles, and thus the cycle capacity retention rate of the battery 100 after 500 cycles is relatively low.

From the test results of Example 1 to Example 15, it is also known that when 0.85≤(Fc·Wc)/(Fa·Wa)≤6.3 and 0.05≤(Fc·Wa)/(Fa·Wc·P)≤1.39, the negative electrode plate 130 of the battery 100 not only does not develop wrinkles but is also less prone to active material shedding. In Example 15, (Fc·Wa)/(Fa·Wc·P)=1.39, while in Example 8, (Fc·Wa)/(Fa·Wc·P)=2.12 > 1.39; therefore, the battery 100 experiences slight active material shedding, and thus the cycle capacity retention rate of the battery 100 after 500 cycles is relatively low.

From the test structures of Comparative Example 4 to Comparative Example 7, it can be seen that when the peel strength Fa between the second adhesive layer 123 and the negative electrode plate 130 and the coating amount Wa per unit area of the second adhesive layer 123 on the base film 121 are both 0 (i.e., only the first adhesive layer 122 is present, and the second adhesive layer 123 is absent), changing the coating amount Wc of the first adhesive layer 122 and the peel strength Fc between the first adhesive layer 122 and the positive electrode plate 110, the negative electrode plate 130 of the battery 100 will have wrinkles to varying degrees, and the cycle capacity retention rate of the battery 100 after 500 cycles decreases.

Please refer to Fig. 7. The embodiment of the present disclosure also provides an energy storage device 200, which comprises a box body 210 and a plurality of batteries 100 as described in the embodiments of the present disclosure. The plurality of batteries 100 are accommodated within the box body 210.

It can be understood that the plurality of batteries 100 of the energy storage device 200 can be connected in parallel with each other; or connected in series with each other; or partially in parallel and partially in series (in other words, hybrid connection). The connection method of the plurality of batteries 100 in the same energy storage device 200 is not specifically limited in the present disclosure.

Optionally, the energy storage device 200 can be at least one of a small energy storage box, a large energy storage cabinet, an energy storage module, and the like. The form of the energy storage device 200 is not specifically limited in the present disclosure. The form of the energy storage device 200 in the present disclosure is only one of its many forms and should not be construed as limiting the energy storage device 200 of the present disclosure.

It should be noted that the stacked arrangement of the plurality of batteries 100 can mean that the plurality of batteries 100 are arranged sequentially in contact with each other, or that the plurality of batteries 100 are arranged sequentially with intervals between them. Furthermore, the plurality of batteries 100 can be stacked horizontally (e.g., in the horizontal direction) or vertically (e.g., in the direction of gravity). The stacking method and direction of the plurality of batteries 100 can be designed according to actual conditions.

It can be understood that the box body 210 has a receiving cavity (not shown in the Fig. ), and the plurality of batteries 100 are accommodated within the receiving cavity. In some embodiments, each receiving cavity accommodates one battery 100. In other embodiments, each receiving cavity accommodates the plurality of batteries 100.

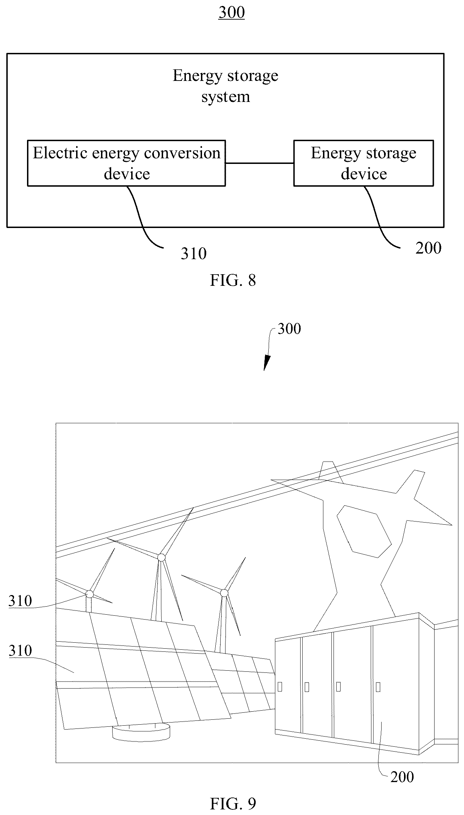

Please refer to Fig. 8 and Fig. 9. The embodiment of the present disclosure also provides an energy storage system 300, which comprises the energy storage device 200 as described in the embodiment of the present disclosure and an electric energy conversion device 310. The electric energy conversion device 310 is electrically connected to the energy storage device 200. The electric energy conversion device 310 is used to convert other forms of energy into electric energy, and the energy storage device 200 is used to store the electric energy.

Energy storage (i.e., energy storage) has a wide range of application scenarios, comprising generation-side energy storage, grid-side energy storage, and consumption-side energy storage. The energy storage system 300 in the embodiment of the present disclosure is described in detail using generation-side energy storage as an example, which should not be construed as limiting the energy storage system 300 of the embodiment of the present disclosure, nor should it be construed as limiting the energy storage device 200 and battery 100 of the embodiment of the present disclosure.

Optionally, the electric energy conversion device 310 can convert at least one of other forms of energy such as solar energy, light energy, wind energy, thermal energy, tidal energy, biomass energy, and mechanical energy into electric energy.

Optionally, the number of electric energy conversion devices 310 can be one or more. When there are a plurality of electric energy conversion devices 310, the plurality of electric energy conversion devices 310 can be connected in series, parallel, or hybrid connection, which is not specifically limited in the present disclosure.

Optionally, the electric energy conversion device 310 can be, but is not limited to, at least one of a photovoltaic panel, a wind power generation device, a hydropower generation device, and the like.

Optionally, the number of energy storage devices 200 can be one or more. When there are the plurality of energy storage devices 200, the plurality of energy storage devices 200 are connected in series or parallel with each other, which is not specifically limited in the present disclosure.

During operation, the electric energy conversion device 310 is used to convert other forms of energy into electric energy and store it in the energy storage device 200. The electric energy stored in the energy storage device 200 can be supplied to electrical loads such as street lights and household appliances during peak electricity price periods, or used for power supply during grid power outages/blackouts. The electric energy generated by the electric energy conversion device 310 can also be supplied to the grid via high-voltage cables to alleviate power supply pressure during grid peak periods.

In the present disclosure, reference to "Example" or "embodiment" means that a specific feature, structure, or characteristic described in connection with the embodiment may be comprised in at least one embodiment of the present disclosure. The appearance of the phrase in various places in the specification does not necessarily refer to the same embodiment, nor is it an independent or alternative embodiment mutually exclusive with other embodiments. Those skilled in the art explicitly and implicitly understand that the embodiments described in the present disclosure can be combined with other embodiments. Furthermore, it should be understood that the features, structures, or characteristics described in the various embodiments of the present disclosure can be combined in any manner without contradiction, forming yet another embodiment that does not depart from the spirit and scope of the technical solution of the present disclosure.

Finally, it should be noted that the above embodiments are only used to illustrate the technical solution of the present disclosure and not to limit it. Although the present disclosure has been described in detail with reference to the preferred embodiments above, those of ordinary skill in the art should understand that modifications or equivalent replacements to the technical solution of the present disclosure should not depart from the spirit and scope of the technical solution of the present disclosure.

## Claims

1. A battery (100) comprising a positive electrode sheet (110), a separator (120), and a negative electrode sheet (130),wherein the separator (120) is disposed between the positive electrode sheet (110) and the negative electrode sheet (130), and the separator (120) comprises a substrate film (121), a first adhesive layer (122), and a second adhesive layer (123), wherein the first adhesive layer (122) is disposed between the substrate film (121) and the positive electrode sheet (110) for bonding the substrate film (121) to the positive electrode sheet (110), and the second adhesive layer (123) is disposed between the substrate film (121) and the negative electrode sheet (130) for bonding the substrate film (121) to the negative electrode sheet (130);
the battery (100) satisfies a relationship: 0.85≤(Fc·Wc)/(Fa·Wa)≤6.36;
wherein Fc is peel strength between the first adhesive layer (122) and the positive electrode sheet (110), Wc is coating amount per unit area of the first adhesive layer (122) on the substrate film (121), Fa is peel strength between the second adhesive layer (123) and the negative electrode sheet (130), and Wa is coating amount per unit area of the second adhesive layer (123) on the substrate film (121).

2. The battery (100) according to claim 1, wherein the battery (100) satisfies a relationship: 2.16 ≤(Fc·Wc)/(Fa·Wa)≤ 6.20.

3. The battery (100) according to claim 1 or 2, wherein the peel strength Fc between the first adhesive layer (122) and the positive electrode sheet (110) is in a range of Fc ≥ 2.1 N/m.

4. The battery (100) according to any one of claims 1 to 3, wherein the peel strength Fa between the second adhesive layer (123) and the negative electrode sheet (130) is in a range of Fa ≥ 0.5 N/m.

5. The battery (100) according to claim 4, wherein the peel strength Fa between the second adhesive layer (123) and the negative electrode sheet (130) is in a range of 0.5 N/m ≤ Fa ≤ 2.2 N/m.

6. The battery (100) according to any one of claims 1 to 5, wherein the coating amount per unit area Wc of the first adhesive layer (122) on the substrate film (121) is in a range of 0.1 g/m² ≤ Wc ≤ 0.65 g/m², and the coating amount per unit area Wa of the second adhesive layer (123) on the substrate film (121) is in a range of 0.1 g/m² ≤ Wa ≤ 0.65 g/m².

7. The battery (100) according to any one of claims 1 to 6, wherein both the first adhesive layer (122) and the second adhesive layer (123) comprise an adhesive, total mass percentage of the adhesive in the first adhesive layer (122) and the second adhesive layer (123) is P%, and the battery (100) further satisfies a relationship: 0.05≤(Fc·Wa)/(Fa·Wc·P)≤1.39.

8. The battery (100) according to claim 7, wherein the battery (100) further satisfies a relationship: 0.05≤(Fc·Wa)/(Fa·Wc·P)≤0.86.

9. The battery (100) according to claim 7 or 8, wherein the total mass percentage P% of the adhesive in the first adhesive layer (122) and the second adhesive layer (123) is in a range of 2% ≤ P% ≤ 25%.

10. An energy storage device (200) comprising a box body (210); and a plurality of batteries (100) according to any one of claims 1 to 9, wherein the plurality of batteries (100) are accommodated in the box body (210).

11. An energy storage system (300) comprising an electric energy conversion device (310) and an energy storage device (200) according to claim 10, wherein the electric energy conversion device (310) is electrically connected to the energy storage device (200), the electric energy conversion device (310) is used to convert other forms of energy into electric energy, and the energy storage device (200) is used to store the electric energy.
